# EUROPÄISCHE PATENTSCHRIFT

(11) **EP 4 309 488 B1**
(45) Veröffentlichungstag und Bekanntmachung des Hinweises auf die Patenterteilung: **11.06.2025**
(21) Anmeldenummer: 23170566.6
(22) Anmeldetag: 28.04.2023
(51) Int. Cl.: A01D 43/08

(54) **FELDHÄCKSLER MIT EINER RAHMENBAUGRUPPE UND EINER AN DER RAHMENBAUGRUPPE DREHBAR GELAGERTEN HÄCKSELTROMMELBAUGRUPPE**
FORAGE HARVESTER WITH A FRAME ASSEMBLY AND A CHOPPING DRUM ASSEMBLY WHICH IS ROTATABLY MOUNTED ON THE FRAME ASSEMBLY
RAMASSEUSE-HACHEUSE DOTÉE D'UN MODULE DE CHÂSSIS ET D'UN MODULE DE TAMBOUR HACHEUR MONTÉ ROTATIF SUR LE MODULE DE CHÂSSIS

(30) Priorität: 22.07.2022 DE 102022118429
(43) Veröffentlichungstag der Anmeldung: 24.01.2024
(73) Patentinhaber: CLAAS Selbstfahrende Erntemaschinen GmbH, 33428 Harsewinkel (DE)
(72) Erfinder: Rathjens, Jochen, 21635 Jork (DE); Ossowski, Kai, 49565 Bramsche (DE)
(74) Vertreter: CLAAS Gruppe

(56) Entgegenhaltungen:
- DE-A1- 102019 110 768
- DE-A1- 102020 115 944
- US-A1- 2006 185 337

## Beschreibung

Die vorliegende Anmeldung betrifft einen Feldhäcksler mit einer Rahmenbaugruppe und einer an der Rahmenbaugruppe drehbar gelagerten Häckseltrommelbaugruppe gemäß dem Oberbegriff des unabhängigen Patentanspruchs 1.

Ein Feldhäcksler weist typischerweise ein Fahrgestell bzw. eine Rahmenbaugruppe auf mit sich in Längsrichtung des Feldhäckslers erstreckenden und durch in Querrichtung verlaufende Träger miteinander verbundenen Rahmenelementen, an der eine Vorderachse, eine Hinterachse, ein Motor, eine Häckseltrommelbaugruppe etc. montiert sind.

Hauptbestandteil der Häckseltrommelbaugruppe ist eine mit Messern besetzte Häckseltrommel. Indem ein Strom von Erntegut auf die Häckseltrommel zu gefördert wird, während die Häckseltrommel rotiert, wird das Erntegut in Stücke geschnitten. Um trotz wechselnden Widerstands durch das Erntegut gleichmäßig zu rotieren, muss die Häckseltrommel ein großes Trägheitsmoment und dementsprechend großen Durchmesser und hohe Masse aufweisen. Dies und die im Betrieb stark schwankenden Schneidkräfte an den Messern machen eine kräftige Welle und dementsprechend große, hoch belastbare Lager erforderlich. Wenn Lagerspiel Rüttelbewegungen der Häckseltrommel ermöglicht, beeinträchtigt dies die Schnittqualität, außerdem führt es zu erhöhtem Verschleiß der Lager, was wiederum das Lagerspiel vergrößert.

Üblicherweise sind derartige Lager als Klemmlager ausgeführt mit einem in Bezug auf das sich in Längsrichtung erstreckende Rahmenelement ortsfest angeordneten Klemmlagerelement und einem an dem ortsfest angeordneten Klemmlagerelement schwenkbar zwischen einer Schließstellung und einer Offenstellung befestigten Klemmlagerelement. Ein Feldhäcksler mit derartigen Lagern ist beispielsweise aus der DE 10 2020 115 944 A1 bekannt. In der Offenstellung des schwenkbaren Klemmlagerelements kann die Häckseltrommelbaugruppe ein- oder ausgebaut werden, wobei das schwenkbare Klemmlagerelement eines Klemmlagers immer durch einen Monteur gehalten werden muss. Die mit der Halterung der schwenkbaren Klemmlagerelemente beauftragten Monteure können somit nicht bei dem eigentlichen Ein- oder Ausbau der Häckseltrommelbaugruppe unterstützen, so dass dieser von zumindest einem weiteren Monteur vorgenommen werden muss. Eine solche Vorgehensweise ist demnach äußerst aufwendig und weist eine erhebliche Verletzungsgefahr für den/die Monteure auf.

Ausgehend hiervon ist es demnach die Aufgabe der vorliegenden Erfindung einen Feldhäcksler mit Klemmlagern zur Lagerung einer Häckseltrommelbaugruppe anzugeben, die einen vereinfachten Ein- und Ausbau der Häckseltrommelbaugruppe erlauben und hierbei eine reduzierte Verletzungsgefahr gewährleisten.

Diese Aufgabe wird erfindungsgemäß durch die Merkmale des unabhängigen Patentanspruchs 1 gelöst, wobei vorteilhafte Weiterbildungen des erfindungsgemäßen Feldhäckslers Gegenstand der entsprechenden abhängigen Patentansprüche 2 bis 13 sind.

Demnach betrifft die vorliegende Erfindung einen Feldhäcksler mit einer Rahmenbaugruppe und einer an der Rahmenbaugruppe drehbar gelagerten Häckseltrommelbaugruppe. Die Rahmenbaugruppe umfasst zwei sich in Längsrichtung des Feldhäckslers erstreckende Rahmenelemente und zwei Klemmlager zur Lagerung der Häckseltrommelbaugruppe, wobei jeweils ein Klemmlager jeweils einem Rahmenelement zugeordnet ist. Jedes Klemmlager umfasst ein erstes Klemmlagerelement und ein an dem ersten Klemmlagerelement schwenkbar befestigtes zweites Klemmlagerelement. Der Feldhäcksler ist dadurch gekennzeichnet, dass jedes Klemmlager eine Sperreinrichtung umfasst, die dazu eingerichtet ist, das zweite Klemmlagerelement in einer Offenstellung, in der das Klemmlager zum Einsetzen oder Entnehmen der Häckseltrommelbaugruppe geöffnet ist, lösbar festzustellen.

Durch die Verwendung der Sperreinrichtung kann das an dem ortsfesten Klemmlagerelement (erstes Klemmlagerelement) schwenkbar befestigte Klemmlagerelement (zweites Klemmlagerelement) bei einer Verlagerung aus einer Schließstellung, in der die Häckseltrommelbaugruppe weder ein- noch ausgebaut werden kann, in die Offenstellung, die auch als Feststellposition bezeichnet werden kann und in der die Häckseltrommelbaugruppe ein- oder ausgebaut werden kann, in dieser Offenstellung festgestellt werden. Der Monteur kann hierdurch die Häckseltrommelbaugruppe besonders unkompliziert ein- oder ausbauen, ohne hierbei das schwenkbare Klemmlagerelement in der Offenstellung festhalten zu müssen und dabei Gefahr zu laufen sich bei dem Ein- oder Ausbau der Häckseltrommelbaugruppe erheblich zu verletzten, da die Finger des Monteurs zum Halten des schwenkbaren Klemmlagerelements im Bereich des das Häckseltrommelbaugruppe aufnehmenden Klemmlagers positioniert sind. Während die Häckseltrommelbaugruppe in die Klemmlager eingesetzt wird, wird das schwenkbare Klemmlagerelement über einen Kontakt von Häckseltrommelbaugruppe und schwenkbarem Klemmlagerelement über die Feststellposition (also die Offenstellung) hinaus verschwenkt, wodurch die mittels der Klemmeinrichtung erzielte Feststellung des schwenkbaren Klemmlagerelements in der Offenstellung gelöst wird. Befindet sich die Häckseltrommelbaugruppe schlussendlich in der Einbauposition in den Klemmlagern senkt sich das schwenkbare Klemmlagerelement selbsttätig in die Schließstellung. Es ist ebenfalls möglich, dass, sobald der Ein- oder Ausbau der Häckseltrommelbaugruppe durch den/die Monteure erfolgt ist, die Feststellung durch eine erneute manuelle Betätigung des schwenkbaren Klemmlagerelements über die Feststellposition hinaus gelöst wird und sich das schwenkbare Klemmlagerelement aus der Offenstellung in die Schließstellung absenkt.

Weiterhin kann die Anzahl der an dem Ein- oder Ausbau der Häckseltrommelbaugruppe beteiligten Monteure reduziert werden, da nicht für die Halterung jedes schwenkbaren Klemmlagerelements ein Monteur benötigt wird, der lediglich mit der Aufgabe betraut ist das schwenkbare Klemmlagerelement in der Offenstellung zu halten. Durch die erfindungsgemäße Lösung kann vielmehr ein Monteur zunächst die schwenkbaren Klemmlagerelemente beider Klemmlager in ihre Offenstellung verlagern, in der sie mittels der Klemmeinrichtung fixiert werden, und anschließend den Ein- oder Ausbau der Häckseltrommelbaugruppe vornehmen bzw. unterstützen.

Gemäß einer vorteilhaften Weiterbildung der Erfindung ist vorgesehen, dass die Sperreinrichtung ein erstes Sperrelement, das an dem ersten Klemmlagerelement angeordnet ist, und ein zweites Sperrelement, das an dem zweiten Klemmlagerelement angeordnet ist, umfasst. Das erste Sperrelement und das zweite Sperrelement wirken zum Feststellen des zweiten Klemmlagerelements in der Offenstellung miteinander zusammen.

Die Verwendung zweier Sperrelemente, die gemeinsam unter Zusammenwirkung die Sperreinrichtung ausbilden, erlaubt es einen an und für sich einfachen Mechanismus bereitzustellen, der jedoch ein zuverlässiges Feststellen des schwenkbaren Klemmlagerelements gewährleistet. Durch die Anordnung des einen Sperrelements an dem einem Klemmlagerelement und des anderen Sperrelements an dem anderen Klemmlagerelement können zudem in einem notwendigen Wartungsfall die einzelnen Komponenten der Klemmeinrichtung besonders einfach ausgetauscht werden, ohne dass die ganze Klemmeinrichtung ausgetauscht werden muss.

Vorzugsweise ist das erste Sperrelement schwenkbar an dem ersten Klemmlagerelement und das zweite Sperrelement ortsfest an dem zweiten Klemmlagerelement angeordnet. Bei einem Verschwenken des zweiten Klemmlagerelements in die Offenstellung bewegen sich das erste und das zweite Sperrelement relativ zueinander.

Durch die ortsfeste Anordnung des zweiten Sperrelements an dem schwenkbaren Klemmlagerelement wird selbiges bei einem Verschwenken des schwenkbaren Klemmlagerelements mitbewegt. Die schwenkbare Befestigung des ersten Sperrelements an dem ersten Klemmlagerelement sorgt dann dafür, dass durch die Bewegung des schwenkbaren Klemmlagerelements und demnach auch des zweiten Sperrelements durch das Zusammenwirken beider Sperrelemente miteinander eine Bewegung des ersten Sperrelements ausgelöst wird. Diese durch verschiedene Anordnungspunkte der Sperrelemente ausgelöste Relativbewegung beider Sperrelemente zueinander sorgt dafür, dass das zweite Sperrelement derart entlang des ersten Sperrelements bei einem Verschwenken des schwenkbaren Klemmlagerelements geführt wird, dass das zweite Klemmlagerelement am Ende des Verschwenkvorgangs, also in der Offenstellung, festgestellt ist.

Gemäß einer vorteilhaften Weiterbildung der Erfindung ist vorgesehen, dass das erste Sperrelement eine Ausnehmung umfasst, in die das zweite Sperrelement in der Offenstellung des zweiten Klemmlagerelements eingreift.

Durch den Eingriff des zweiten Sperrelements in die Ausnehmung des ersten Sperrelements wird das schwenkbare Klemmlagerelement auf besonders unkomplizierte Art und Weise in der Offenstellung festgestellt. Insbesondere die Anbindung jedes Sperrelements an einem der Klemmlagerelemente sowie die Fähigkeit zur Drehbewegung des ersten Sperrelements in Bezug auf das rahmenortsfest angeordnete Klemmlagerelement in Kombination mit der ortsfesten Anordnung des zweiten Sperrelements am schwenkbaren Klemmlagerelement sowie die vorhandene Ausnehmung am ersten Sperrelement sorgen dafür, dass sich das schwenkbare Klemmlagerelement nicht aus der Offenstellung bewegt, sobald das zweite Sperrelement in die Ausnehmung eingreift.

Gemäß einer vorteilhaften Weiterbildung der Erfindung ist vorgesehen, dass das erste Sperrelement eine, vorzugsweise gekrümmte, Konturfläche umfasst, an der das zweite Sperrelement bei einem Verschwenken des zweiten Klemmlagerelements in die Offenstellung entlanggleitet.

Die Konturfläche des ersten Sperrelements sorgt dafür, dass das zweite Sperrelement kontrolliert entlang des ersten Sperrelements geführt wird, so dass dieses schlussendlich eine Position in Bezug auf das erste Sperrelement einnimmt, die zu einem Feststellen des schwenkbaren Klemmlagerelements in der Offenstellung führt.

Vorzugsweise ist die Ausnehmung des ersten Sperrelements in der Konturfläche des ersten Sperrelements ausgebildet ist.

Durch die Ausbildung der Ausnehmung in der Konturfläche des ersten Sperrelements wird das zweite Sperrelement kontrolliert entlang einer Bahnlinie in die Ausnehmung geführt. Hierdurch kann der Gefahr entgegengewirkt werden, dass sich eine Fehlstellung des zweiten Sperrelements in Bezug auf das erste Sperrelement einstellt, die zu einem unbeabsichtigten Lösen des schwenkbaren Klemmlagerelements während eines Ein- oder Ausbaus der Häckseltrommelbaugruppe führen und somit für ein erhebliches Verletzungsrisiko während dieses Arbeitsschrittes sorgen könnte.

Gemäß einer vorteilhaften Weiterbildung der Erfindung ist vorgesehen, dass das erste Sperrelement als Bügel und das zweite Sperrelement als Eingreifvorsprung ausgebildet ist.

Die Ausgestaltung der Klemmeinrichtung als Kombination aus Bügel und Eingreifvorsprung erlaubt die Bereitstellung einer besonders einfachen, kostengünstigen aber sehr sicheren Klemmeinrichtung, die sich durch einen sehr geringen Bauraumbedarf auszeichnet.

Vorzugsweise ist der Eingreifvorsprung mittels eines in einer am zweiten Klemmlagerelement ausgebildeten Ausnehmung angeordneten Befestigungsmittels, insbesondere einer Schraube oder eines Bolzens, ausgebildet.

Hierdurch ist ein besonders einfacher Austausch des zweiten Sperrelements, also des Eingreifvorsprungs, im Falle einer Wartung der Klemmeinrichtung möglich, indem lediglich das beschädigte Befestigungsmittel aus der am schwenkbaren Klemmlagerelement ausgebildeten Ausnehmung entfernt und ein neues Befestigungsmittel eingesetzt werden muss.

Gemäß einer vorteilhaften Weiterbildung der Erfindung ist vorgesehen, dass die Klemmlager jeweils eine Spannschraube zum Befestigen des ersten Klemmlagerelements und des zweiten Klemmlagerelements miteinander in einer Schließstellung des zweiten Klemmlagerelements umfassen.

Gemäß einer vorteilhaften Weiterbildung der Erfindung ist vorgesehen, dass die Klemmlager als sphärische Klemmlager ausgebildet sind.

Durch diese Ausgestaltung der Klemmlager legt nicht jedes Klemmlager für sich die Drehachse fest, sondern jedes Klemmlager definiert nur einen einzigen Punkt, den Mittelpunkt der Kugelfläche, als einen Punkt, durch den die Drehachse verlaufen muss. So kann die Häckseltrommelbaugruppe frei von innerer Spannung an den Rahmenteilen montiert werden und relativ zu diesen reibungs- und verschleißarm rotieren.

Gemäß einer vorteilhaften Weiterbildung der Erfindung ist vorgesehen, dass die Häckseltrommelbaugruppe eine in den Klemmlagern drehbar aufgenommene Welle und einen mit der Welle drehfest verbundenen Adapter für einen Erntevorsatz umfasst.

Indem die Welle und mit ihr der Adapter gedreht wird, kann die Höhe des Erntevorsatzes über dem Boden besonders präzise angepasst werden.

Insbesondere umfasst die Häckseltrommelbaugruppe eine an der Welle drehbar gelagerte Häckseltrommel.

Die Welle, die in den Klemmlagern drehbar gelagert ist, muss somit nur kleine, langsame Drehungen zum Verstellen des Adapters ausführen und dreht demnach nicht mit der hohen Drehzahl der Häckseltrommel. Demnach kann die Welle in dem Klemmlager gleitgelagert sein, was zu einer reduzierten Komplexität der Lagerung führt.

Vorzugsweise umfasst der Feldhäcksler wenigstens ein hydraulisches Stellglied zum Antreiben einer Schwenkbewegung des Adapters.

Hierdurch kann die Höhe des Erntevorsatzes über dem Boden besonders unkompliziert und vorzugsweise automatisch eingestellt werden.

Die vorliegende Erfindung wird nachstehend anhand der in den Figuren abgebildeten Ausführungsformen näher beschrieben.

Es zeigen:
- FIG. 1: eine schematische und exemplarische Darstellung eines erfindungsgemäßen Feldhäckslers;
- FIG. 2: eine schematische und exemplarische Darstellung einer erfindungsgemäßen Rahmenbaugruppe des erfindungsgemäßen Feldhäckslers und einer an der Rahmenbaugruppe montierten Häckseltrommelbaugruppe;
- FIG. 3: eine schematische und exemplarische Teildarstellung der erfindungsgemäßen Rahmenbaugruppe des erfindungsgemäßen Feldhäckslers ohne montierte Häckseltrommelbaugruppe;
- FIG. 4: eine schematische und exemplarische Darstellung der erfindungsgemäßen Klemmlager der erfindungsgemäßen Rahmenbaugruppe in einer ersten Stellung (Schließstellung); und
- FIG. 5: eine schematische und exemplarische Darstellung der erfindungsgemäßen Klemmlager der erfindungsgemäßen Rahmenbaugruppe in einer zweiten Stellung (Offenstellung bzw. Feststellposition).

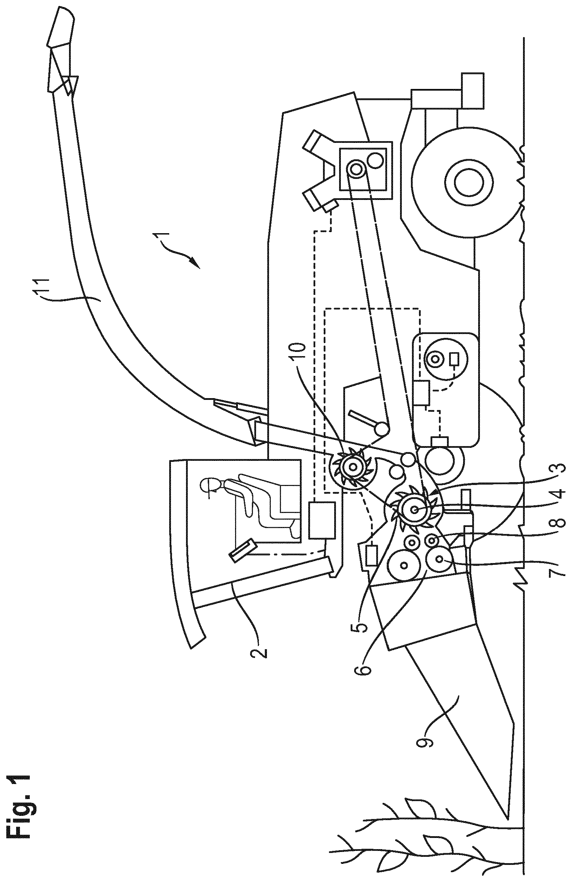

FIG. 1 zeigt eine schematische und exemplarische Darstellung eines erfindungsgemäßen Feldhäckslers 1. Die Karosserie des Feldhäckslers 1 ist in ihrem Vorderteil, unterhalb einer Fahrerkabine 2, aufgeschnitten dargestellt, um interne, Erntegut verarbeitende Baugruppen bzw. Arbeitsaggregate des Feldhäckslers 1 zeigen zu können. Eine dieser Baugruppen bzw. Arbeitsaggregate ist eine sogenannte Häckseltrommelbaugruppe 3 mit einer um eine sich in Fahrzeugquerrichtung erstreckende Rotationsachse 4 rotierende Häckseltrommel 5.

Der Häckseltrommelbaugruppe 3 ist eine Fördereinrichtung 6 für Erntegut vorgelagert. Die Fördereinrichtung 6 umfasst mehrere Walzenpaare 7, 8, die jeweils einen Spalt begrenzen und gegensinnig drehangetrieben sind, um das durch den Spalt hindurch geförderte Erntegut der Häckseltrommel 5 zuzuführen.

Die Fördereinrichtung 5 trägt wiederum einen in Anpassung an das aufzunehmende Erntegut austauschbaren Erntevorsatz 9.

In der Häckseltrommelbaugruppe 3 zerkleinertes Erntegut wird einem Nachbeschleuniger 10 zugeführt, der dem zerkleinerten Erntegut die nötige Geschwindigkeit verleiht, um einen Auswurfkrümmer 11 zu durchlaufen und in ein - in den FIGs. nicht dargestelltes - Begleitfahrzeug übergeladen zu werden.

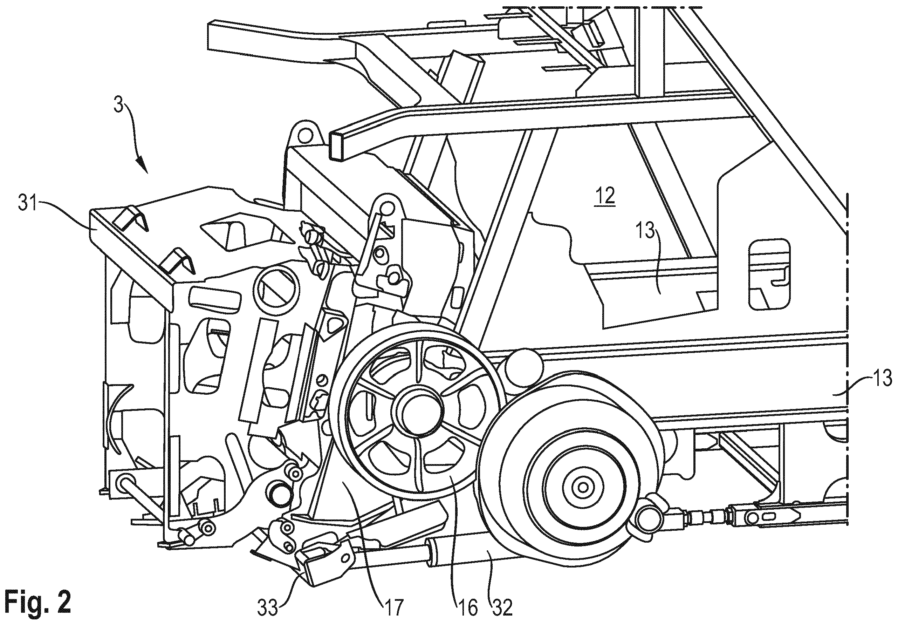

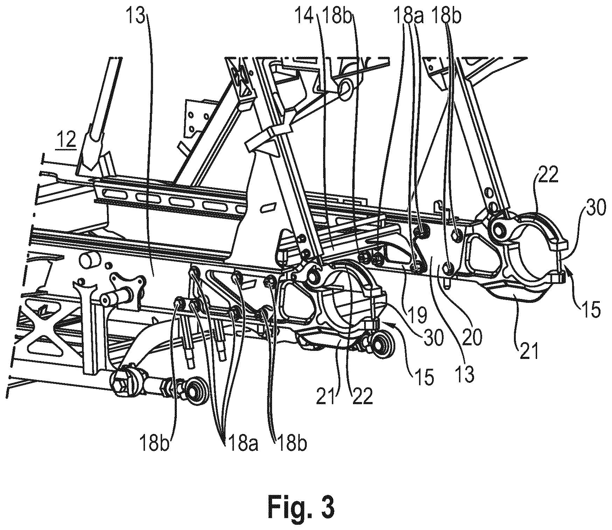

Die FIGs. 2 bis 5 zeigen jeweils einen vorderen Bereich einer Rahmenbaugruppe 12 des Feldhäckslers 1, an der die Häckseltrommelbaugruppe 3 drehbar gelagert ist. In FIG. 2 ist die Rahmenbaugruppe 12 mit montierter Häckseltrommelbaugruppe 3, in den FIGs. 3 bis 5 ist die Rahmenbaugruppe 12 hingegen ohne montierte Häckseltrommelbaugruppe 3 dargestellt. An der Rahmenbaugruppe 12 sind zumindest eine Vorderachse sowie eine Hinterachse des Feldhäckslers 1 aufgehängt. Die Rahmenbaugruppe 12 umfasst zwei sich in Längsrichtung des Feldhäckslers 1 erstreckende Rahmenelemente 13, die jeweils als Hohlprofile ausgebildet sind. Zwischen den beiden sich in Längsrichtung des Feldhäckslers 1 erstreckenden Rahmenelementen 13 ist im vorderen Bereich der Rahmenbaugruppe 12 ein sich in Querrichtung des Feldhäckslers 1 erstreckendes Rahmenelements 14, das auch als Querrahmenstrebe bezeichnet werden kann, angeordnet. Weiterhin umfasst die Rahmenbaugruppe 12 des Feldhäckslers 1 zwei Klemmlager 15 zur Lagerung der Häckseltrommelbaugruppe 3, wobei jeweils ein Klemmlager 15 jeweils einem sich in Längsrichtung des Feldhäckslers 1 erstreckenden Rahmenelement 13 zugeordnet ist.

Das vordere Ende der sich in Längsrichtung des Feldhäckslers 1 erstreckenden Rahmenelemente 13 ist in FIG. 2 hinter einer die Drehung der Häckseltrommel 5 antreibenden Riemenscheibe 16 bzw. einem die Häckseltrommel 5 umgebenden Gehäuse 17 der Häckseltrommelbaugruppe 3 verborgen.

Das in Querrichtung des Feldhäckslers 1 angeordnete Rahmenelement 14 ist mit jeweils einem sich in Längsrichtung des Feldhäckslers 1 erstreckenden Rahmenelement 13 sowie einem dem jeweiligen sich in Längsrichtung des Feldhäckslers 1 erstreckenden Rahmenelement 13 zugeordneten Klemmlager 15 in zumindest einem gemeinsamen Befestigungspunkt 18a kraft- und/oder formschlüssig verbunden. Mit anderen Worten, das sich in Querrichtung des Feldhäckslers 1 erstreckende Rahmenelement 14 ist mit jeweils einem Ende der sich in Querrichtung des Feldhäcksler 1 gegenüberliegenden Enden mit einem an das entsprechende Ende angrenzenden sich in Längsrichtung des Feldhäckslers 1 erstreckenden Rahmenelement 13 und einem diesem Rahmenelement 13 zugeordneten Klemmlager 15 in zumindest einem gemeinsamen Befestigungspunkt 18a kraft- und/oder formschlüssig verbunden. Die Verbindung der Elemente 13, 14, 15 in jeweils zumindest einem gemeinsamen Befestigungspunkt 18a ist in einer bevorzugten, in der FIG. 3 dargestellten Ausführungsform mittels einer bzw. als Schraubverbindung, vorzugsweise als Durchgangsschraubverbindung, ausgebildet.

Vorzugsweise wird die jeweilige Verbindung von dem in Querrichtung des Feldhäckslers 1 angeordnetem Rahmenelement 14 mit einem sich in Längsrichtung des Feldhäckslers 1 erstreckenden Rahmenelement 13 sowie einem diesem sich in Längsrichtung des Feldhäckslers 1 erstreckenden Rahmenelement 13 zugeordneten Klemmlager 15 nicht über nur einen gemeinsamen Befestigungspunkt 18a ausgebildet. Vielmehr ist eine Vielzahl solcher gemeinsamen Befestigungspunkte 18a für eine solche Verbindung vorgesehen. Gemäß einer bevorzugten Ausführungsform, die in FIG. 3 dargestellt ist, umfasst eine solche Verbindung jeweils vier gemeinsame Befestigungspunkte 18a, in denen die zuvor genannten Elemente 13, 14, 15 der Rahmenbaugruppe kraft- und/oder formschlüssig miteinander verbunden sind. Die Verbindung der Elemente 13, 14, 15 der Rahmenbaugruppe 12 in jeweils zumindest einem gemeinsamen Befestigungspunkt 18a sorgt für eine starre Anbindung von dem in Querrichtung des Feldhäckslers 1 angeordneten Rahmenelement 14, der Rahmenquerstrebe, den beiden sich in Längsrichtung des Feldhäckslers 1 erstreckenden Rahmenelementen 13 und den beiden Klemmlagern 15 und eine tragende Rahmenbaugruppe 12. Weiterhin wird durch den jeweils zumindest einen gemeinsamen Befestigungspunkt 18a eine vorteilhafte Kraftleitung zwischen den Elementen 13, 14 und 15 erzielt.

Das in Querrichtung des Feldhäckslers 1 angeordnete Rahmenelement 14 umfasst an jedem der sich in Querrichtung gegenüberliegenden Enden einen, insbesondere in FIG. 3 dargestellten, plattenförmig ausgebildeten Anbindungsbereich 19 bzw. jedes Ende des in Querrichtung des Feldhäckslers 1 angeordneten Rahmenelements 14 umfasst einen plattenförmig ausgebildeten Anbindungsbereich 19, der im montierten Zustand der Rahmenbaugruppe 12 an einer Außenwandung 20 jeweils eines Rahmenelements 13 der beiden sich in Längsrichtung des Feldhäckslers 1 erstreckenden Rahmenelemente 13 flächig anliegt und für die zuvor beschriebene Verbindung in zumindest einem gemeinsamen Befestigungspunkt 18a genutzt wird. Die beiden Außenwandungen 20 der zwei sich in Längsrichtung des Feldhäckslers 1 erstreckenden Rahmenelemente 13, an denen jeweils ein plattenförmig ausgebildeter Anbindungsbereich 19 des in Querrichtung des Feldhäckslers 1 angeordneten Rahmenelements 14 anliegt, sind im montierten Zustand der Rahmenbaugruppe 12 einander zugewandt angeordnet bzw. ausgerichtet. Der plattenförmig ausgebildete Anbindungsbereich 19 ist vorzugsweise derart kraftflussoptimiert ausgestaltet, dass der Anbindungsbereich 19 in den für die Kraftleitung und Anbindung vorgesehenen bzw. erforderlichen Bereichen Materialanhäufungen aufweist.

Die beiden Klemmlager 15 umfassten jeweils ein erstes Klemmlagerelement 21 und ein zweites Klemmlagerelement 22. Das zweite Klemmlagerelement 22 ist schwenkbar an dem ersten Klemmlagerelement 21 befestigt. Die schwenkbare Befestigung des zweiten Klemmlagerelements 22 an dem ersten Klemmlagerelement 21 kann beispielsweise über eine Kombination aus Lagerbolzen und Lagerhülse, wie in den FIGs. 3 bis 5 dargestellt, oder aber auch über andere Lagerungskonzepte realisiert sein. Im montierten Zustand des Klemmlagers 15 an dem entsprechenden sich in Längsrichtung des Feldhäckslers 1 erstreckenden Rahmenelement 13 ist das erste Klemmlagerelement 21 ort- bzw. positionsfest zu dem entsprechenden Rahmenelement 13 angeordnet. Mit anderen Worten, das erste Klemmlagerelement 21 kann sich nicht relativ zu dem entsprechenden Rahmenelement 13 bewegen, das zweite Klemmlagerelement 22 kann hingegen relativ zum ersten Klemmlagerelement 21 verschwenkt bzw. verbracht werden.

Jedes Klemmlager 15, insbesondere das erste Klemmlagerelement 21 eines jeden Klemmlagers 15, ist in das entsprechende sich in Längsrichtung des Feldhäckslers 1 erstreckende Rahmenelement 13, das als Hohlprofil ausgebildet ist, zumindest bereichsweise eingesetzt bzw. eingesteckt. Zumindest bereichsweise bedeutet in diesem Zusammenhang, dass ein die Häckseltrommelgruppe 3 aufnehmender bzw. der Lagerung dienender Bereich bzw. Sektor des ersten Klemmlagerelements 21 nicht innerhalb des sich in Längsrichtung des Feldhäckslers 1 erstreckenden Rahmenelements 13 angeordnet ist, sondern, wie in den FIGs. 3 bis 5 zu erkennen, dem jeweiligen sich in Längsrichtung des Feldhäckslers 1 erstreckenden Rahmenelement 13 vorsteht. Jedes in ein entsprechendes sich in Längsrichtung des Feldhäckslers 1 erstreckendes Rahmenelement 13 eingesetzte erste Klemmlagerelement 21 ist im montierten Zustand der Rahmenbaugruppe 12, wie zuvor bereits beschrieben, in zumindest einem gemeinsamen Befestigungspunkt 18a, vorzugsweise in vier gemeinsamen Befestigungspunkten 18a, mit dem entsprechenden Rahmenelement 13 sowie dem in Querrichtung des Feldhäckslers 1 angeordneten Rahmenelement 14 kraft- und/oder formschlüssig verbunden, vorzugsweise mit diesen Elementen 13, 14 verschraubt. Ähnlich wie die plattenförmig ausgebildeten Anbindungsbereiche 19 des in Querrichtung des Feldhäckslers 1 angeordneten Rahmenelements 14, ist das erste Klemmlagerelement 21 vorzugsweise derart kraftflussoptimiert ausgestaltet, dass das erste Klemmlagerelement 21 in den für die Kraftleitung und Anbindung vorgesehenen bzw. erforderlichen Bereichen Materialanhäufungen aufweist. Hierdurch wird eine hoch belastbare Struktur mit optimiertem Gewicht bzw. optimierter Gewichtsverteilung realisiert. Vorzugsweise ist das erste Klemmlagerelement 21 als Gussbauteil, besonders bevorzugt als Sphärogussbauteil, ausgebildet. Alternativ ist auch eine Ausgestaltung als Stahlgussbauteil vorstellbar.

Neben der Verbindung des ersten Klemmlagerelements 21 in dem zumindest einen gemeinsamen Befestigungspunkt 18a kann das erste Klemmlagerelement 21 weiterhin in einigen weiteren, insbesondere drei weiteren, Befestigungspunkten 18b nur mit dem entsprechenden sich in Längsrichtung des Feldhäckslers 1 erstreckenden Rahmenelement 13 kraft- und/oder formschlüssig verbunden sein.

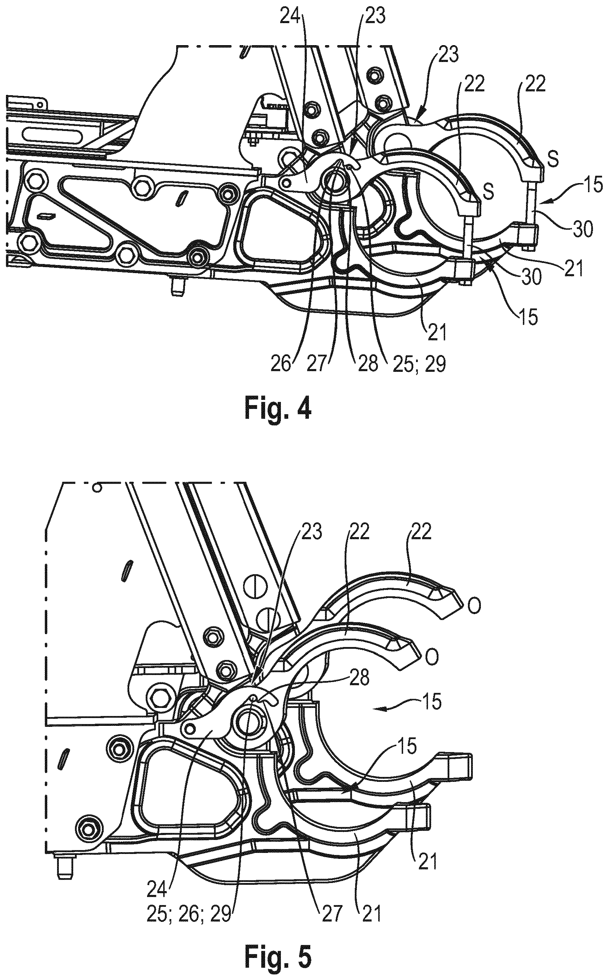

Wie bereits angedeutet dienen die beiden Klemmlager 15 der Lagerung der Häckseltrommelbaugruppe 3 des Feldhäckslers 1. Damit ein Ein- oder Ausbau der Häckseltrommelbaugruppe 3 möglich ist, muss das zweite Klemmlagerelement 22, das schwenkbar an dem ersten Klemmlagerelement 21 befestigt ist, aus einer Schließstellung S, die in FIG. 4 dargestellt ist und in der ein Ein- oder Ausbau der Häckseltrommelbaugruppe 3 nicht möglich ist, in eine Offenstellung bzw. Feststellposition O, die in FIG. 5 dargestellt ist und in der das Klemmlager 15 geöffnet ist, verschwenkt bzw. verbracht werden.

Damit ein oder mehrere mit dem Ein- oder Ausbau der Häckseltrommelbaugruppe 3 beauftragte Monteure das zweite Klemmlagerelement 22 während des Ein- oder Ausbaus der Häckseltrommelbaugruppe nicht dauerhaft in der Offenstellung O halten müssen, umfasst jedes Klemmlager 15 eine Sperreinrichtung 23, die der lösbaren Feststellung des zweiten Klemmlagerelements 22 in der Offenstellung bzw. Feststellposition O dient.

Die Sperreinrichtung 23 umfasst ein erstes Sperrelement 24, das an dem ersten Klemmlagerelement 21 angeordnet ist, sowie ein zweites Sperrelement 25, das an dem zweiten Klemmlagerelement 22 angeordnet ist, die miteinander zum Feststellen des zweiten Klemmlagerelements 22 in der Offenstellung bzw. Feststellposition O zusammenwirken. Das erste Sperrelement 24 ist schwenkbar an dem ersten Klemmlagerelement 21 angeordnet bzw. befestigt, das zweite Sperrelement 25 ist hingegen ortsfest bzw. positionsfest an dem zweiten Klemmlagerelement 22 angeordnet bzw. befestigt. Bei einem Verschwenken bzw. Verbringen des zweiten Klemmlagerelements 22 aus der Schließstellung S in die Offenstellung bzw. Feststellposition O bewegen sich die beiden Sperrelemente 24, 25 aufgrund ihrer Anordnung an den beiden Klemmlagerelementen 21, 22 relativ zueinander, wodurch die Feststellung des zweiten Klemmlagerelements 22 in der Offenstellung bzw. Feststellposition O realisiert wird.

Das erste Sperrelement 24 umfasst eine Ausnehmung 26, in die das zweite Sperrelement 25 in der Offenstellung bzw. Feststellposition O des zweiten Klemmlagerelements 22 zwecks der Feststellung desselben eingreift. Das erste Sperrelement 24 umfasst weiterhin eine Konturfläche 27, an der das zweite Sperrelement 25 bei einem Verschwenken bzw. Verbringen des zweiten Klemmlagerelements 22 aus der Schließstellung S in die Offenstellung bzw. Feststellposition O entlanggleitet. Die Ausnehmung 26 des ersten Sperrelements 24 ist vorzugsweise in der Konturfläche 27 des ersten Sperrelements 24 ausgebildet, wodurch das zweite Sperrelement 25 bei einem Verschwenken bzw. Verbringen des zweiten Klemmlagerelements 22 aus der Schließstellung S in die Offenstellung bzw. Feststellposition O entlang der Konturfläche 27 in die Ausnehmung 26 gleitet. Die Konturfläche 27 des ersten Sperrelements 24 ist vorzugsweise gekrümmt ausgebildet, wodurch insbesondere bei der in den FIGs. 3 bis 5 abgebildeten Ausführungsform der Sperreinrichtung 23, die nachfolgend noch beschrieben wird, eine exakte Führung des zweiten Sperrelements 25 in die Ausnehmung 26 des ersten Sperrelements 24 zum Feststellen des zweiten Klemmlagerelements 22 realisiert wird. Weiter vorzugsweise kann die Konturfläche 27 einen der Ausnehmung 26 in Gleitrichtung des zweiten Sperrelements 25 vorgelagerten Vorsprung 28 umfassen, der einem ungewollten Lösen des Eingriffs des zweiten Sperrelements 25 in die Ausnehmung 26 vorteilhaft entgegenwirkt.

Gemäß einer bevorzugten und in den FIGs. 3 bis 5 dargestellten Ausführungsform ist das erste Sperrelement 24 als Bügel und das zweite Sperrelement 25 als Eingreifvorsprung ausgebildet. Der Eingreifvorsprung ist vorzugsweise mittels eines in einer am zweiten Klemmlagerelement 22 ausgebildeten Ausnehmung 29, insbesondere einer Bohrung, angeordneten Befestigungsmittels, insbesondere einer Schraube oder eines Bolzens, ausgebildet. Alternativ hierzu kann das zweite Sperrelement 25 bzw. das als Eingreifvorsprung ausgebildete zweite Sperrelement 25 ein Bestandteil des zweiten Klemmlagerelements 22 sein, beispielsweise ein angeschweißter oder integral mit dem zweiten Klemmlagerelement 22 ausgebildeter Steg.

Alternativ zu der Ausgestaltung der Klemmeinrichtung 23 als eine Kombination von miteinander zusammenwirkendem Bügel (erstes Sperrelement 24) und Eingreifvorsprung (zweites Sperrelement 25) sind auch andere Ausgestaltungen der Klemmeinrichtung 23, die eine Feststellung des zweiten Klemmlagerelements 22 in der Offenstellung bzw. Feststellposition O ermöglichen, vorstellbar, beispielsweise eine Ausgestaltung in Form eines federbelasteten Rastmechanismus.

Die Klemmlager 15 umfassen weiterhin jeweils eine Spannschraube 30 mittels der das erste Klemmlagerelement 21 und das zweite Klemmlagerelement 22 in der Schließstellung S des zweiten Klemmlagerelements 22 miteinander befestigt werden, um die Häckseltrommelbaugruppe 3 zu fixieren. Hierzu umfassten sowohl das erste Klemmlagerelement 21 als auch das zweite Klemmlagerelement 22 eine Bohrung. Insbesondere ist die Bohrung im ersten Klemmlagerelement 21 als Durchgangsbohrung, die Bohrung im zweiten Klemmlagerelement 22 hingegen als Sacklochbohrung ausgebildet.

Die beschriebene Ausgestaltung der beiden Klemmlager 15 berücksichtigend kann ein Einbau einer Häckseltrommelbaugruppe 3 demnach beispielsweise wie folgt erfolgen. Zunächst wird die Spannschraube 30 jedes Klemmlagers 15 entfernt. Das zweite Klemmlagerelement 22 wird aus der Schließstellung S in die Offenstellung bzw. Feststellposition O verschwenkt bzw. verbracht. Während der Verschenkung bzw. Verbringung des zweiten Klemmlagerelements 22 aus der Schließstellung S in die Offenstellung bzw. Feststellposition O bewegen sich die beiden Sperrelemente 24, 25 der Sperreinrichtung 23 derart relativ zueinander, dass das zweite Klemmlagerelement 22 bei Erreichen der Offenstellung bzw. Feststellposition O mittels der Sperreinrichtung 23 festgestellt ist, indem das zweite Sperrelement 25 in die Ausnehmung 26 des ersten Sperrelements 24 eingreift. Ein selbsttätiges Zurückschwenken des zweiten Klemmlagerelements 22 aus der Offenstellung bzw. Feststellposition O aufgrund der Gewichtskraft des zweiten Klemmlagerelements 22 wird durch die Sperreinrichtung 23 verhindert. In der Offenstellung bzw. Feststellposition O des zweiten Klemmlagerelements 22 ist das entsprechende Klemmlager 15 geöffnet, so dass die Häckseltrommelbaugruppe 3 in das Klemmlager 15 eingesetzt werden kann. Während des Einbauvorgangs der Häckseltrommelbaugruppe 3 gelangt eine - in den FIGs. nicht dargestellte - Welle der Häckseltrommelbaugruppe 3, die von den Klemmlagern 15 aufgenommen wird und an der die Häckseltrommel 5 drehbar gelagert ist, in Kontakt mit dem zweiten Klemmlagerelement 22 eines jeden Klemmlagers 15. Hierdurch wird während des Einbauvorgangs der Häckseltrommelbaugruppe 3 das zweite Klemmlagerelement 22 über die Offenstellung bzw. Feststellposition O hinaus verschwenkt bzw. verbracht. Aufgrund der Bewegung des zweiten Klemmlagerelements 22 über die Offenstellung bzw. Feststellposition O hinaus, wird die Feststellung durch die Sperreinrichtung 23 gelöst. Befindet sich die Welle der Häckseltrommelbaugruppe 3 in ihrer finalen Einbauposition in jedem Klemmlager 15 schwenken die jeweiligen zweiten Klemmlagerelemente 22 selbsttätig in ihre jeweilige Schließstellung S zurück, in der das erste Klemmlagerelement 21 und das zweite Klemmlagerelement 22 mittels der Spannschraube 30 dann miteinander fixiert werden können. Bei einem Ausbau der Häckseltrommelbaugruppe 3 ist es nicht erforderlich, dass das zweite Klemmlagerelement 22 manuell in die Offenstellung bzw. Feststellposition O verschwenkt bzw. verbracht wird. Vielmehr wird das zweite Klemmlagerelement 22 durch ein Anheben der Häckseltrommelbaugruppe 3 über den Kontakt der Welle der Häckseltrommelbaugruppe 3 mit dem zweiten Klemmlagerelement 22 eines jeden Klemmlagers 15 in die Offenstellung bzw. Feststellposition O verschwenkt bzw. verbracht.

Es ist ebenfalls möglich, dass die Häckseltrommelbaugruppe 3, insbesondere die Welle der Häckseltrommelbaugruppe 3, bei ihrem Einbau nicht mit den zweiten Klemmlagerelementen 22 in Kontakt kommt, so dass sich die zweiten Klemmlagerelemente 22 in der finalen Einbauposition der Welle der Häckseltrommelbaugruppe 3 noch immer in der festgestellten Offenstellung bzw. Feststellposition O befinden. Durch eine manuelles Verschwenken bzw. Verbringen der zweiten Klemmlagerelemente 22 über die Offenstellung bzw. Feststellposition O hinaus, kann dann die Feststellung durch die Sperreinrichtung 23 gelöst werden und die zweiten Klemmlagerelemente 22 können in ihre Schließstellung S verschwenkt bzw. verbracht werden.

Gemäß einer Ausführungsform sind die Klemmlager 15 als sphärische Klemmlager 15 ausgebildet. Die beiden Klemmlagerelemente 21, 22 bilden gemeinsam das Klemmlager 15 mit zwei eine Konkavität aufweisenden Ringsektoren aus. In die Konkavität wird ein - in den FIGs. nicht dargestelltes - ringförmiges Element eingelegt, das wiederum vorgesehen ist, die Welle der Häckseltrommelbaugruppe 3 aufzunehmen. Die Konkavität der Ringsektoren sind Teil einer Kugelfläche, genauso wie die Außenumfangsfläche des ringförmigen Elements. Das ringförmige Element ist daher, wenn es in die Konkavität eingelegt ist, um zwei zur Welle der Häckseltrommelbaugruppe 3 orthogonal verlaufende Achsen schwenkbar. Wenn die Häckseltrommelbaugruppe 3 in die Klemmlager 15 eingesetzt bzw. eingelegt wird, kann sich die Ausrichtung ihrer Achse frei an eventuelle Toleranzen in Positionierung und Ausrichtung der Klemmlager 15 anpassen, so dass, wenn die Spannschraube 30 festgezogen und das ringförmige Element zwischen den durch das erste und zweite Klemmlagerelement 21, 22 gebildeten Ringsektoren fixiert bzw. geklemmt wird, daraus keine internen Spannungen in der Häckseltrommelbaugruppe 3 resultieren.

Die Kugelflächen der Konkavität der Ringsektoren und der Außenumfangsfläche des ringförmigen Elements haben jeweils gleiche Radien, so dass die Ringsektoren und das ringförmige Element im montierten Zustand der Häckseltrommelbaugruppe 3 einen großflächigen Kontakt miteinander ausbilden.

An einer Vorderseite des Gehäuses 17 der Häckseltrommelbaugruppe 3 ist ein in FIG. 2 dargestellter, vorzugsweise viereckig ausgestalteter, Adapter 31 vorgesehen, an den ein - in FIG. 2 nicht dargestellter - Erntevorsatz 9 montiert oder eine - in FIG. 2 ebenfalls nicht dargestellte - Hebemaschine zum Unterstützen des Ein- oder Ausbaus der Häckseltrommelbaugruppe 3 angekoppelt werden kann. Der Adapter 31 ist mit der Welle der Häckseltrommelbaugruppe 3 drehfest verbunden. Unter jedem der sich in Längsrichtung des Feldhäckslers 1 erstreckenden Rahmenelemente 13 erstreckt sich ein hydraulisches Stellglied 32 in Längsrichtung des Feldhäckslers 1. Ein hinteres Ende jedes Stellglieds 32 ist mit der Rahmenbaugruppe 12 verbunden, die vorderen Enden greifen gemeinsam an einen - in FIG. 2 nur angedeuteten - Querbalken 33 des Gehäuses 17 der Häckseltrommelbaugruppe 3 an. Indem die Stellglieder 32 gemeinsam ausfahren, schwenken bzw. verbringen sie das Gehäuse 17 der Häckseltrommelbaugruppe um die Rotationsachse 4 und positionieren dadurch den an den Adapter 31 montierten Erntevorsatz 9.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Feldhäcksler | 24 | erstes Sperrelement |
| 2 | Fahrerkabine | 25 | zweites Sperrelement |
| 3 | Häckseltrommelbaugruppe | 26 | Ausnehmung am ersten Sperrele-ment |
| 4 | Rotationsachse | 27 | Konturfläche am ersten Sperrele- ment |
| 5 | Häckseltrommel | 28 | Vorsprung am ersten Sperrele-ment |
| 6 | Fördereinrichtung | 29 | Ausnehmung am zweiten Klemm- lagerelement |
| 7 | Walzenpaar | 30 | Spannschraube |
| 8 | Walzenpaar | 31 | Adapter für Erntevorsatz |
| 9 | Erntevorsatz | 32 | hydraulisches Stellglied |
| 10 | Nachbeschleuniger | 33 | Querbalken des Gehäuses derHäckseltrommelbaugruppe |
| 11 | Auswurfkrümmer | O | Offenstellung bzw. Feststellposi-tion des zweiten Klemmlagerele- ments |
| 12 | Rahmenbaugruppe | S | Schließstellung des zweiten Klemmlagerelements |
| 13 | Rahmenelement der Rahmenbau- gruppe | | |
| 14 | Rahmenelement der Rahmenbau- gruppe | | |
| 15 | Klemmlager der Rahmenbau-gruppe | | |
| 16 | Riemenscheibe | | |
| 17 | Gehäuse | | |
| 18a | gemeinsamer Befestigungspunkt | | |
| 18b | weitere Befestigungspunkte | | |
| 19 | Anbindungsbereich der Querrah-menstrebe | | |
| 20 | Außenwandung des Rahmenele- ments | | |
| 21 | erstes Klemmlagerelement | | |
| 22 | zweites Klemmlagerelement | | |
| 23 | Sperreinrichtung | | |

## Patentansprüche

1. Feldhäcksler (1) mit einer Rahmenbaugruppe (12) und einer an der Rahmenbaugruppe (12) drehbar gelagerten Häckseltrommelbaugruppe (3), wobei die Rahmenbaugruppe (12) zwei sich in Längsrichtung des Feldhäckslers (1) erstreckende Rahmenelemente (13) und zwei Klemmlager (15) zur Lagerung der Häckseltrommelbaugruppe (3) umfasst, wobei jeweils ein Klemmlager (15) jeweils einem Rahmenelement (13) zugeordnet ist, wobei jedes Klemmlager (15) ein erstes Klemmlagerelement (21) und ein an dem ersten Klemmlagerelement (21) schwenkbar befestigtes zweites Klemmlagerelement (22) umfasst,
**dadurch gekennzeichnet, dass**
jedes Klemmlager (15) eine Sperreinrichtung (23) umfasst, die dazu eingerichtet ist, das zweite Klemmlagerelement (22) in einer Offenstellung (O), in der das Klemmlager (15) zum Einsetzen oder Entnehmen der Häckseltrommelbaugruppe (3) geöffnet ist, lösbar festzustellen.

2. Feldhäcksler (1) nach Anspruch 1, **dadurch gekennzeichnet, dass** die Sperreinrichtung (23) ein erstes Sperrelement (24), das an dem ersten Klemmlagerelement (21) angeordnet ist, und ein zweites Sperrelement (25), das an dem zweiten Klemmlagerelement (22) angeordnet ist, umfasst, wobei das erste Sperrelement (24) und das zweite Sperrelement (25) zum Feststellen des zweiten Klemmlagerelements (22) in der Offenstellung (O) miteinander zusammenwirken.

3. Feldhäcksler (1) nach Anspruch 2, **dadurch gekennzeichnet, dass** das erste Sperrelement (24) schwenkbar an dem ersten Klemmlagerelement (21) und das zweite Sperrelement (25) ortsfest an dem zweiten Klemmlagerelement (22) angeordnet ist, wobei sich bei einem Verschwenken des zweiten Klemmlagerelements (22) in die Offenstellung (O) das erste und das zweite Sperrelement (24, 25) relativ zueinander bewegen.

4. Feldhäcksler (1) nach Anspruch 2 oder 3, **dadurch gekennzeichnet, dass** das erste Sperrelement (24) eine Ausnehmung (26) umfasst, in die das zweite Sperrelement (25) in der Offenstellung (O) des zweiten Klemmlagerelements (22) eingreift.

5. Feldhäcksler (1) nach einem der Ansprüche 1 bis 4, **dadurch gekennzeichnet, dass** das erste Sperrelement (24) eine, vorzugsweise gekrümmte, Konturfläche (27) umfasst, an der das zweite Sperrelement (25) bei einem Verschwenken des zweiten Klemmlagerelements (22) in die Offenstellung (O) entlanggleitet.

6. Feldhäcksler (1) nach Anspruch 4 und 5, **dadurch gekennzeichnet, dass** die Ausnehmung (26) des ersten Sperrelements (24) in der Konturfläche (27) des ersten Sperrelements (24) ausgebildet ist.

7. Feldhäcksler (1) nach einem der Ansprüche 2 bis 6, **dadurch gekennzeichnet, dass** das erste Sperrelement (24) als Bügel und das zweite Sperrelement (25) als Eingreifvorsprung ausgebildet ist.

8. Feldhäcksler (1) nach Anspruch 7, **dadurch gekennzeichnet, dass** der Eingreifvorsprung mittels eines in einer am zweiten Klemmlagerelement (22) ausgebildeten Ausnehmung (29) angeordneten Befestigungsmittels, insbesondere einer Schraube oder eines Bolzens, ausgebildet ist.

9. Feldhäcksler (1) nach einem der Ansprüche 1 bis 8, **dadurch gekennzeichnet, dass** die Klemmlager (15) jeweils eine Spannschraube (30) zum Befestigen des ersten Klemmlagerelements (21) und des zweiten Klemmlagerelements (22) miteinander in einer Schließstellung (S) des zweiten Klemmlagerelements (22) umfassen.

10. Feldhäcksler (1) nach einem der Ansprüche 1 bis 9, **dadurch gekennzeichnet, dass** die Klemmlager (15) jeweils als sphärische Klemmlager (15) ausgebildet sind.

11. Feldhäcksler (1) nach einem der Ansprüche 1 bis 10, **dadurch gekennzeichnet, dass** die Häckseltrommelbaugruppe (3) eine in den Klemmlagern (15) drehbar aufgenommene Welle und einen mit der Welle drehfest verbundenen Adapter (31) für einen Erntevorsatz (9) umfasst.

12. Feldhäcksler (1) nach Anspruch 11, **dadurch gekennzeichnet, dass** die Häckseltrommelbaugruppe (3) eine an der Welle drehbar gelagerte Häckseltrommel (5) umfasst.

13. Feldhäcksler (1) nach Anspruch 11 oder 12, **dadurch gekennzeichnet, dass** der Feldhäcksler (1) wenigstens ein hydraulisches Stellglied (32) umfasst zum Antreiben einer Schwenkbewegung des Adapters (31).

## Claims

1. A forage harvester (1) with a frame assembly (12) and a chopping drum assembly (3) rotatably mounted on the frame assembly (12), wherein the frame assembly (12) comprises two frame elements (13) extending in the longitudinal direction of the forage harvester (1) and two clamp bearings (15) for mounting the chopping drum assembly (3), wherein a respective clamp bearing (15) is associated with a respective frame element (13), wherein each clamp bearing (15) comprises a first clamp bearing element (21) and a second clamp bearing element (22) which is pivotably fixed to the first clamp bearing element (21), **characterized in that**
each clamp bearing (15) comprises a locking device (23), which is configured to releasably lock the second clamp bearing element (22) in an open position (O) in which the clamp bearing (15) is open for insertion or removal of the chopping drum assembly (3).

2. The forage harvester (1) according to claim 1, **characterized in that** the locking device (23) comprises a first locking element (24) which is disposed on the first clamp bearing element (21) and a second locking element (25) which is disposed on the second clamp bearing element (22), wherein the first locking element (24) and the second locking element (25) cooperate together in order to lock the second clamp bearing element (22) in the open position (O).

3. The forage harvester (1) according to claim 2, **characterized in that** the first locking element (24) is pivotably disposed on the first clamp bearing element (21) and the second locking element (25) is immovably disposed on the second clamp bearing element (22), wherein, when the second clamp bearing element (22) is pivoted into the open position (O), the first and the second locking elements (24, 25) move relative to one another.

4. The forage harvester (1) according to claim 2 or claim 3, **characterized in that** the first locking element (24) comprises a recess (26), into which the second locking element (25) engages in the open position (O) of the second clamp bearing element (22).

5. The forage harvester (1) according to one of claims 1 to 4, **characterized in that** the first locking element (24) comprises a contoured surface (27), which is preferably curved, along which the second locking element (25) slides when the second clamp bearing element (22) is pivoted into the open position (O).

6. The forage harvester (1) according to claim 4 and claim 5, **characterized in that** the recess (26) of the first locking element (24) is formed in the contoured surface (27) of the first locking element (24).

7. The forage harvester (1) according to one of claims 2 to 6, **characterized in that** the first locking element (24) is formed as a shackle and the second locking element (25) is formed as an engaging protrusion.

8. The forage harvester (1) according to claim 7, **characterized in that** the engaging protrusion is formed by means of a fastening means, in particular a screw or a bolt, disposed in a recess (29) formed on the second clamp bearing element (22).

9. The forage harvester (1) according to one of claims 1 to 8, **characterized in that** the clamp bearings (15) each comprise a tensioning screw (30) for fastening the first clamp bearing element (21) and the second clamp bearing element (22) together in a closed position (S) of the second clamp bearing element (22).

10. The forage harvester (1) according to one of claims 1 to 9, **characterized in that** the respective clamp bearings (15) are constructed as spherical clamp bearings (15).

11. The forage harvester (1) according to one of claims 1 to 10, **characterized in that** the chopping drum assembly (3) comprises a shaft which is received for rotation in the clamp bearings (15) and an adapter (31) for a harvester front assembly (9) which is connected to the shaft in a manner which is fixed against rotation.

12. The forage harvester (1) according to claim 11, **characterized in that** the chopping drum assembly (3) comprises a chopping drum (5) which is mounted for rotation on the shaft.

13. The forage harvester (1) according to claim 11 or claim 12, **characterized in that** the forage harvester (1) comprises at least one hydraulic actuator (32) for actuating a pivotal movement of the adapter (31).

## Revendications

1. Ramasseuse-hacheuse (1) dotée d'un module de châssis (12) et d'un module de tambour hacheur (3) monté tournant sur le module de châssis (12), le module de châssis (12) comprenant deux éléments de châssis (13), s'étendant dans la direction longitudinale de la ramasseuse-hacheuse (1), et deux paliers de serrage (15) destinés au support du module de tambour hacheur (3), un palier de serrage (15) étant respectivement associé à un élément de châssis (13), chaque palier de serrage (15) comprenant un premier élément de palier de serrage (21) et un deuxième élément de palier de serrage (22) fixé avec possibilité de pivotement au premier élément de palier de serrage (21),
**caractérisée en ce que**
chaque palier de serrage (15) comprend un dispositif de verrouillage (23) qui est agencé pour immobiliser de façon amovible le deuxième élément de palier de serrage (22) dans une position ouverte (O) dans laquelle le palier de serrage (15) est ouvert aux fins d'insérer ou de retirer le module de tambour hacheur (3).

2. Ramasseuse-hacheuse (1) selon la revendication 1, **caractérisée en ce que** le dispositif de verrouillage (23) comprend un premier élément de verrouillage (24), qui est placé sur le premier élément de palier de serrage (21), et un deuxième élément de verrouillage (25) qui est placé sur le deuxième élément de palier de serrage (22), le premier élément de verrouillage (24) et le deuxième élément de verrouillage (25) coopérant l'un avec l'autre pour bloquer le deuxième élément de palier de serrage (22) dans la position ouverte (O).

3. Ramasseuse-hacheuse (1) selon la revendication 2, **caractérisée en ce que** le premier élément de verrouillage (24) est disposé avec possibilité de pivotement sur le premier élément de palier de serrage (21), et le deuxième élément de verrouillage (25) est disposé de manière fixe sur le deuxième élément de palier de serrage (22), sachant que lors d'un pivotement du deuxième élément de palier de serrage (22) pour passer dans la position ouverte (O), le premier et le deuxième élément de palier de serrage (24, 25) se déplacent l'un par rapport à l'autre.

4. Ramasseuse-hacheuse (1) selon la revendication 2 ou 3, **caractérisée en ce que** le premier élément de verrouillage (24) comporte un évidement (26) dans lequel s'engage le deuxième élément de verrouillage (25), dans la position ouverte (O) du deuxième élément de palier de serrage (22).

5. Ramasseuse-hacheuse (1) selon une des revendications 1 à 4, **caractérisée en ce que** le premier élément de verrouillage (24) comporte une surface profilée (27), de préférence incurvée, le long de laquelle le deuxième élément de verrouillage (25) glisse lors d'un pivotement du deuxième élément de palier de serrage (22) pour atteindre la position ouverte (O).

6. Ramasseuse-hacheuse (1) selon les revendications 4 et 5, **caractérisée en ce que** l'évidement (26) du premier élément de verrouillage (24) est réalisé dans la surface profilée (27) du premier élément de verrouillage (24).

7. Ramasseuse-hacheuse (1) selon une des revendications 2 à 6, **caractérisée en ce que** le premier élément de verrouillage (24) est réalisé sous forme d'étrier et le deuxième élément de verrouillage (25) sous forme de saillie d'engagement.

8. Ramasseuse-hacheuse (1) selon la revendication 7, **caractérisée en ce que** la saillie d'engagement est réalisée à l'aide d'un moyen de fixation, notamment d'une vis ou d'un boulon, disposé dans un évidement (29) formé sur le deuxième élément de palier de serrage (22).

9. Ramasseuse-hacheuse (1) selon une des revendications 1 à 8, **caractérisée en ce que** les paliers de serrage (15) comprennent respectivement une vis de serrage (30), destinée à fixer entre eux le premier élément de palier de serrage (21) et le deuxième élément de palier de serrage (22), dans une position fermée (S) du deuxième élément de palier de serrage (22).

10. Ramasseuse-hacheuse (1) selon une des revendications 1 à 9, **caractérisée en ce que** les paliers de serrage (15) sont réalisés respectivement sous forme de paliers de serrage (15) sphériques.

11. Ramasseuse-hacheuse (1) selon une des revendications 1 à 10, **caractérisée en ce que** le module de tambour hacheur (3) comprend un arbre, monté tournant dans les paliers de serrage (15), et un adaptateur (31) relié de façon solidaire en rotation à l'arbre et destiné à un outil frontal de récolte (9).

12. Ramasseuse-hacheuse (1) selon la revendication 11, **caractérisée en ce que** le module de tambour hacheur (3) comprend un tambour hacheur (5) monté tournant sur l'arbre.

13. Ramasseuse-hacheuse (1) selon la revendication 11 ou 12, **caractérisée en ce que** la ramasseuse-hacheuse (1) comprend au moins un actionneur (32) hydraulique destiné à entraîner un mouvement pivotant de l'adaptateur (31).
